# EUROPEAN PATENT SPECIFICATION

(11) **EP 1 415 442 B1**
(45) Date of publication and mention of the grant of the patent: **29.03.2006**
(21) Application number: 02747116.8
(22) Date of filing: 05.07.2002
(51) Int. Cl.: H04L 12/46, H04L 12/28, H04L 29/06

(54) **Metropolitan access via tunnel transports**
Metropolitanzugang über Tunnelübertragung
Access metropolitain par l'intermediaire d'acheminements tunnels

(30) Priority: 06.07.2001 US 303471 P
(43) Date of publication of application: 06.05.2004
(73) Proprietor: Nortel Networks Limited, St.Laurent, Quebec H4S 2A9 (CA)
(72) Inventor: CASEY, Liam, L., Ottawa, Ontario K1S 2X2 (CA)
(74) Representative: Boyce, Conor
(86) International application number: PCT/CA2002/001028
(87) International publication number: WO 2003/005648

(56) References cited:
- WO-A-00/30313
- BRITTAIN P ET AL: "MPLS VIRTUAL PRIVATE NETWORKS" DATA CONNECTION WHITE PAPER, [Online] - November 2000 (2000-11) pages 1-32, XP002217621 Retrieved from the Internet: <URL:http://www.dataconnection.com/downloa d/mplsvpns.pdf> [retrieved on 2002-10-22]
- CALHOUN P R ET AL: "Layer Two Tunneling Protocol "L2TP" Multi-Protocol Label Switching Extension" INTERNET DRAFT, [Online] - March 2000 (2000-03) pages 1-5, XP002217622 Retrieved from the Internet: <URL:http://www.ietf.org/proceedings/00jul /I-D/l2tpext-mpls-00.txt> [retrieved on 2002-10-21]
- MARTINI ET AL: "Transport of Layer 2 Frames Over MPLS" INTERNET DRAFT, [Online] - May 2001 (2001-05) pages 1-15, XP002217623 Retrieved from the Internet: <URL:http://www.watersprings.org/links/mlr /id/draft-martini-l2circuit-trans-mpls-06. txt> [retrieved on 2002-10-21]
- MARTINI ET AL: "Encapsulation Methods for Transport of Layer 2 Frames Over MPLS" INTERNET DRAFT, [Online] - May 2001 (2001-05) pages 1-16, XP002217624 Retrieved from the Internet: <URL:http://www.watersprings.org/links/mlr /id/draft-martini-l2circuit-encap-mpls-02. txt> [retrieved on 2002-10-21]

## Description

### Field of the Invention

The present invention relates to metropolitan access, and is particularly concerned with Layer 2 Ethernet networks.

### Background of the Invention

Ethernet has emerged as the standard of choice for local area networks (LAN). With speeds of 10 Mbps, 100 Mbps, 1 Gbps and soon 10 Gbps, Ethernet capacity has grown to meet the need for increased network bandwidth. Consequently, the conception of Optical Ethernet networks whose optical wavelengths are used as backbone carriers with content as encapsulated Ethernet packets marries the ubiquitous Ethernet with the enormous bandwidth of optical networks. Despite the inherent elegance of this conceptual network, actual implementation of such networks must devise physical and or logical arrangements to ensure optimal performance, scalability, and operability.

In view of the Ethernet presence in LAN and high speed LAN, it is desirable to use Ethernet for metropolitan access networks. However, scaling potentially hundreds of thousands of customers challenges such an approach. Also by the very nature of metro access a large number of different customers' LANs, separation of customer traffic must be provided to prevent security risks such as spoofing, where one customer could impersonate another customer by using that customer's MAC address.

Trying to provide an Ethernet solution in metro access would also require centralized administration of all MAC addresses for the entire metro access network. The administrative overhead and inconvenience to each customer's network administration would likely be unacceptable.
Not only direct access LAN clients, but also dial-up and remote access to corporate LAN must be provided in any metropolitan access solution.
"MPLS Virtual Private Networks" data connection white paper by Brittain P. et al discloses a method of accessing a service network via a Layer 2 transport having an edge-facing device through which an edge-facing device gains access to the Layer 2 transport and a core-facing device coupled to the service network, the method comprising the steps of providing multi-protocol label switching (MPLS) label switched path between the edge-facing device and the core-facing device; and establishing a Layer 2 tunneling protocol (L2TP) tunnel over the label switched path to transport traffic between the edge-facing device and the service network.

### SUMMARY OF THE INVENTION

The present invention provides a method of accessing a service network via a Layer 2 transport characterised by swapping a label between the L2TP tunnel and an MPLS tunnel to the service network at the core device, wherein the label swapped at the core device is the header added by L2TP, as defined by independent claim 1. The present invention further provides a system for providing access to a service network via a layer 2 transport as defined by independent claim 9. Advantageously, using MPLS reduces complexity and allows higher throughput. Since L2TP adds a header to each packet, if viewed as being a label, then the transition form L2TP tunnel to MPLS tunnel can be advantageously effected by swapping the L2TP "label" for an MPLS label, thereby eliminating any need to translate between protocols.
Conveniently, to put into effect the transport of an L2TP tunnel over an MPLS label switched path requires a change of bits in signaling messages.
Preferably, the MPLS LSP is carried on an Ethernet network.
Advantageously, the use of an Ethernet network allows the customer facing device to cost effectively include an L2TP Access Concentrator function (LAC), as the LAC only needs to deal with one label and need not be MPLS aware.

The present invention will be further understood from the following detailed description with reference to the drawings in which.
Fig. 1 illustrates a network reference model for accessing service networks;
Fig. 2 illustrates a portion of the network of Fig. 1;
Fig. 3a illustrates a portion of the network of Fig. 2 including a first embodiment of the present invention;
Fig. 3b illustrates a packet for the tunnel of Fig. 3a according to a first embodiment of the present invention;
Fig. 4a illustrates a portion of the network of Fig. 2 including a second embodiment of the present invention; and
**Fig. 4b** illustrates a packet for the tunnel of Fig. 4a according to a second embodiment of the present invention.

### Detailed Description of the Preferred Embodiment

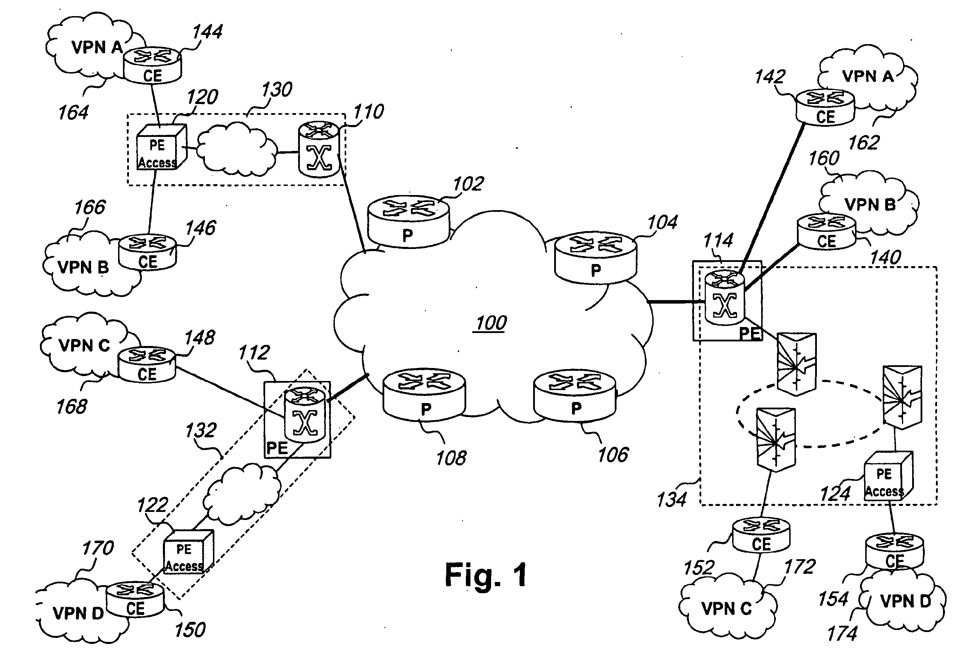

Referring to Fig. 1 there is provided a network reference model for accessing service networks. The network reference model includes IP, MPLS backbones as represented by 100 and a plurality of provider internal devices 102, 104, 106, 108. Connected to the backbones is a plurality of provider edges (PE) core-facing devices as represented by devices 110, 112, and 114. The PE core-facing devices 110, 112 and 114 are connected to customer-facing devices 120, 122, and 124, respectively. Logical PE are defined for each of the PE core-facing devices 110, 112, and 114 as logical PE 130, 132 and 134, respectively. As can be seen from the network reference model. Coupled to each logical PE are customer edge (CE) devices. Customer edge (CE) devices 140 and 142 are shown coupled directly to PE core device 114. Customer edge (CE) devices 144 and 146 are coupled to the logical PE 130. Customer edge (CE) devices 148 and 150 are coupled to the logical PE 132. Customer edge (CE) devices 152 and 154 are coupled to the logical PE 134.

A logical provider edge (LPE) provides a way to organize network components in a hierarchy in order to deliver virtual private LAN segment (VPLS) service. A VPLS is a type of virtual private network in which packets forwarded between VPN sites are Ethernet packets. VPLS service is also known as transparent LAN service (TLS). A LPE includes a Core-PE and an Edge-PE and the connectivity that links the two. This may be in the form of, but not limited to, a switched Ethernet transport (SET). A Core-PE is a core-facing device through which traffic of a switched Ethernet transport (SET) passes on its way to a core network. The Edge-PE is a customer-facing device through which traffic from a customer edge (CE) device passes in order to access the SET and ultimately other sites in the customer's VPN. The CE device is the device through which traffic of a VPN at a particular site passes on its way to other sites of a VPN. A CE device thus represents a site of a VPN. The switched Ethernet transport (SET) provides Layer 2 transport between a plurality of Edge-PE and a Core-PE.

Each CE device is shown coupled to a virtual private network. Hence CE devices 140 and 142 are coupled to instances of VPNB 160 and VPNA 162, respectively. CE devices 144 and 146 are coupled to instances of VPNA 164 and VPNB 166, respectively. CE devices 148 and 150 are coupled to instances of VPNC 168 and VPND 170, respectively. CE devices 152 and 154 are coupled to instances of VPNC 172 and VPND 172, respectively.

As can be appreciated from the network reference model, the actual form of the access network between the client edge device and the provider edge core is transparent once logical PEs are defined.

As a consequence, CE devices directly connected to the PE core, for example CE devices 140 and 142 are provisioned at the same point (the PE core 114) as CE devices 152 and 154. Hence, there is a single point of provisioning. Interworking of the logical provider edge with the IP/MPLS backbones 100 enhances scalability and resiliency of optical Ethernet implementations incorporating this use of logical PE. Finally, use of logical PE provides flexibility in the L2 transport network.

The Providers Metro optical network is assumed to be composed of a number of Switched Ethernet Transport (SET) networks. The LPE organization ties together a group of Edge-PEs and one, or a small number, of Core-PEs by interconnecting them with one or more SETs. Note that in the trivial case the SET is a point-to-point link that serves just one Edge-PE and one Core-PE. Other instances of SETS include, but are not restricted to, a resilient packet ring (RPR) as defined by the IEEE 802.17 committee and hierarchical RPRs with links connected by Ethernet switches. It is a characteristic of a SET that it deals only with the MAC addressing of the equipment in attached directly to it via the Edge-PE and Core-PEs.

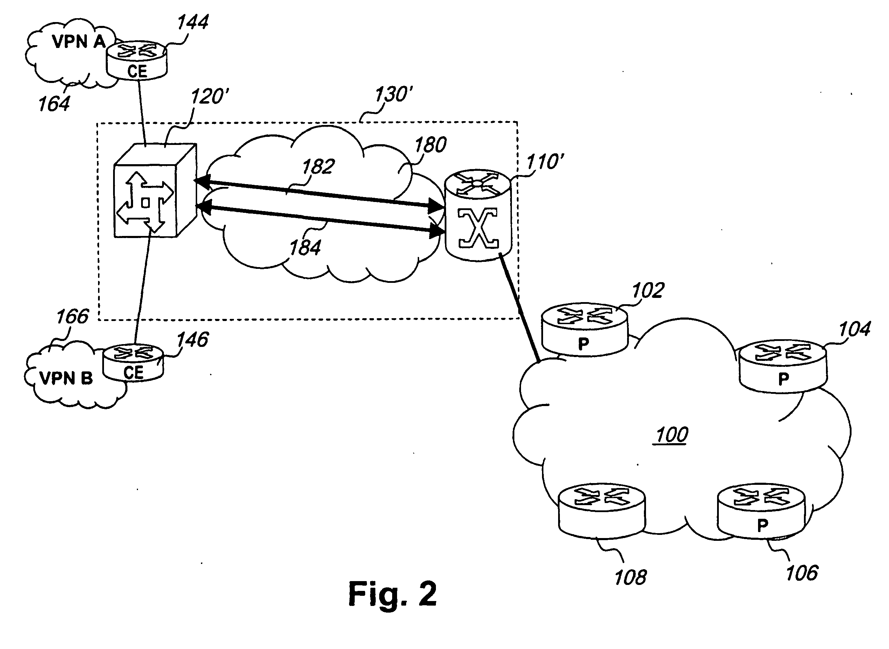

Referring to Fig. 2, there is illustrated a portion of the network of Fig. 1. In Fig. 2, the logical provider edge (LPE) 130¹ includes a PE-Core 110¹, an Edge-PE 120¹ and a switched Ethernet transport (SET) 180. The SET 180 provides Layer 2 transport between the PE-Core 110¹ and the Edge-PE 120¹. For each VPN (for example VPNA and VPNB), a two-way tunnel is established between the Edge-PE 120¹ and the PE-Core 110¹. These tunnels are instantiated as multi-protocol label switching (MPLS) label switched paths (LSP). Hence, for the present example, a first tunnel 182 is provided for VPNA and a second tunnel 184 is provided for VPNB.

Referring to Fig., 3a, there is illustrated a portion of the network of Fig. 2 including a first embodiment of the present invention.

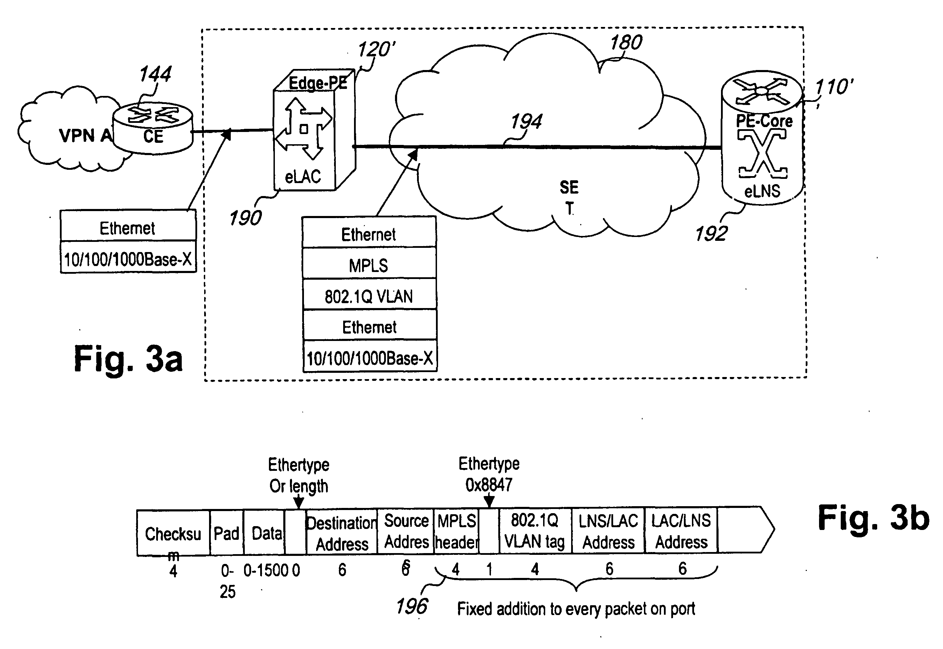

The Edge-PE 120¹ and the PE-Core 110¹ of Fig. 2 include the functions needed to support VPN service for Ethernet based customer networks. However there is a need to provide access to VPN services for remote users via dial-up or other nondedicated links, such as ADSL. In Fig. 3a, the Edge-PE 120¹ is modified to include a Layer 2 tunneling protocol access concentrator based on Ethernet packets (eLAC) module 190. Similarly, the PE-Core 110¹/ is modified to include a Layer-2 tunneling protocol network server module based on Ethernet packets (eLNS) module 192. The eLAC module 190 and the eLNS 192 use MPLS label switched path (LSP) to carry a L2TP tunnel 194.

Referring to Fig. 3b, there is illustrated a packet for the tunnel of Fig. 3a according to a first embodiment of the present invention.

In a first embodiment, a label 196 is attached to every packet and has predetermined fields. When the packets reaches the PE-Core 110¹ from the Edge-PE 120¹, the label 196 is swapped for an MPLS label for an MPLS tunnel across the core network 100. When a packet is received by the PE-Core 110¹ for the Edge-PE 120¹ the MPLS label is swapped for the MPLS/L2TP label of Fig. 3b.

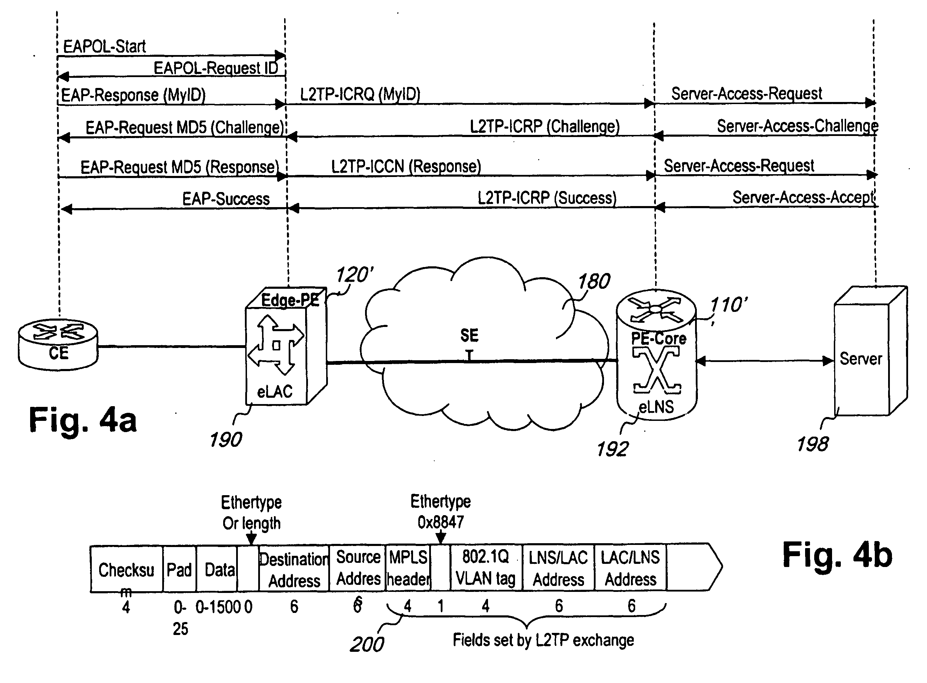

Referring to Fig. 4a, there is illustrated a portion of the network of Fig. 2 including a second embodiment of the present invention.

In the second embodiment of Fig. 4a, Extensible Authentication Protocol (EAP) is used between the customer edge 144 and the Edge-PE 120¹. This ensures the customer edge 144 is known to the server 198. The remote customer edge device 144 initiates the access by sending an "EAPOL-start" to the Edge-PE 120¹, which replies with an "EAPOL-Request ID". The remote CE device 144 replies with an "EAP-Response (My ID)" that identifies the CE device, selects the eLNS 192 and may also name desired service, e.g. acme3@vpe.OESP. The eLAC 190 forwards the identify in L2TP as "L2TP-ICRQ(MyID)". The eLNS 192 of PE-Core 110¹ forwards the identity to the server 198 as a "Server-Access-Request". The server 198 responds with a "Server-Access-Challenge", which the eLNS 192 relays as an "LT2P-ICRP(challenge)". The eLAC 190 forwards the challenge as an "EAP-Request MD5(Challenge)". The CE device 144 replies with an "EAP-Request MD5(Response)". This is forwarded as an "L2TP-ICCN (Response)" by the eLAC 190 and passed to the server 198 as a "server-Access-Request". The server 198 accepts the request with a "Server-Access-Accept". The eLNS 192 forwards the acceptance as an "L2TP-ICRP (Success)". Finally the eLAC 190 sends an "EAP-Success" message to the CE device 144. In this way authenticated access is provided between the CE device 144 and the server 198.

Referring to Fig. 4b, there is illustrated a packet for the tunnel of Fig. 4a according to a second embodiment of the present invention.

The packet extension used in Fig. 4a is shown in Fig. 4b. The extension has the same format as that of Fig. 3b, however the label 200 has its fields set by the L2TP exchange of Fig. 4a, rather than using fixed fields as in Fig. 3b.

In operation, after authentication/tunnel set-up (or provisioned) each access port on eLAC is mapped to a tunnel. Tunnel forwarding information consists of Service/VC label, and the address of the terminating eLNS. A Service/VC label is pushed in front of incoming Ethernet packet, which is then forwarded to the terminating eLNS. The eLNS may be known by any of several identities which may require local resolution for forwarding on the SET:
1) By an IP address. Which can be resolved to a MAC address (+VLAN tag if used) in a SET via an ARP.
2) Via configuration of the eLNS MAC address (+VLAN tag if used) at the eLAC.

While the exemplary embodiments of Figs 1-4b are described in the context of providing virtual private network services (VPN), the PE-Core can provide access to any of the following service edge functional types:

### VPE Services

- Point-to-point Ethernet.
- (Virtual) Bridge (multi-point to multi-point) providing:
   - direct ports (e.g. to HQ or Service Providers in same co-located data center)
   - eL2TP/MPLS ports over Metro
   - Martini/Kompella ports over long haul.

This technique would work in conjunction with any defined MPLS-VPN mechanisms that distributed labels between PEs across a core for VPLS/TLS type services. This would include the proposed Martini or Kompella techniques for label distribution and other derivative works that used label distribution protocols such as LDP or BGP for VPN applications.

### Internet Access

- Use MPLS label as "un-spoofable" customer identifier for personal Internet services.
- Metro transport for "Internet Protocol (IP)" Digital Subscriber Line Access Multiplexers (DSLAMs), Cable Modem Termination System (CMTS), as well as small to medium enterprises (SME's) served by eLAC Ethernet switches.

### IP VPN PE

- MPLS service label provides customer separation-authentication helps security

### Wireless

- GGSN (L2TP tunnels switched to new SCSN as mobile moves)
The present invention includes the following:
1. Use MPLS LSP as the tunnel transport method within the L2TP method of tunneling customer traffic to a service networ and the use of straight label supping in a VPN PE to achieve hyber operational throughput and higher scalability in the number of VPN customer sites served. Additional embodiments of the present invention further include the following:
2. As 1 with options selected from those available, or proposed, in an L2TP deployment, so that the resulting encapsulation of Layer 2 packets is identical to any emerging standard (e.g. that proposed by Martini et al) for Layer 2 packets over MPLS.
3. With 1 or 2, the implementation of an LNS (L2TP Network Server) with Layer 2 (or alternatively Layer 3) VPN PE (Virtual Private Network Provider Edge) function.
4. As 1 where the MPLS is carried over an Ethernet network, such that the LAC and LNS are MPLS adjacent routes and use penultimate hop label stack popping to reduce the number of labels in the stack to a single label.
5. As 4 where the operator deploying the L2TP over MPLS over an Ethernet infrastructure uses the VLAN capability to secure and separate the traffic of a plurality of owners of LNSs.
6. As 3 or 4 where the L2TP payload is also Ethernet and Layer 2 VPN services realized by the PE are LAN extension, Transparent LAN service, VLAN switched services or like Virtual Private Ethernet services.
7. As 6, where individual ports on a LAC are only allowed to pass traffic after the customer has authenticated himself using EAPOE protocol (Extensible Authentication Protocol over Ethernet) or similar.
8. As 6 or 7, where individual customers choose the Service Network that their traffic will be tunneled to by using an EAPOE my-ID field that is a qualified domain name (where the domain name is mapped by the LAC terminating the EAPOE to an LNS of the Service Network with the specified domain name.
9. As an addition to 8 where the individual customer chooses the type of service his traffic will receive fro the service network by including a qualifier before the domain name that is interpreted by the LNS. This identifier may identify a VPN that the customer belongs to, but its use is not restricted to this application.

## Claims

1. A method of accessing a service network (100) via a Layer 2 transport having an edge-facing device (120, 120') through which an entity (144, 146) gains access to the Layer 2 transport and a core-facing device (110, 110') coupled to the service network (100), the method comprising the steps of:
providing multi-protocol label switching MPLS label switched path between the edge-facing device (120, 120') and the core-facing device (110, 110');
establishing a Layer 2 tunneling protocol L2TP tunnel (194) over the label switched path to transport traffic between the edge-facing device (120, 120') and the service network (100); and
**characterised by**
swapping a label (196, 200) between the L2TP tunnel and an MPLS tunnel to the service network at the core-facing device (110, 110'), wherein the label swapped at the core-facing device(110, 110') is the header added by L2TP.

2. A method as claimed in claim 1 wherein the step of establishing includes encapsulating Layer 2 packets for transport over the L2TP tunnel.

3. A method as claimed in claim 2 wherein the step of encapsulating of Layer 2 packets provides an encapsulation like Martini encapsulation for Layer 2 packets over MPLS.

4. A method as claimed in claim 1 wherein the providing step includes providing a L2TP network server LNS function at the core-facing device (110).

5. A method as claimed in claim 4 wherein the Layer 2 transport is an Ethernet network and the step of providing includes providing an L2TP access concentrator LAC function at the edge-facing device (110).

6. A method as claimed in claim 5 wherein the LAC function and the LNS function comprise adjacent MPLS switches.

7. A method as claimed in claim 6 wherein the LAC function and the LNS function comprise adjacent MPLS switches that use label stack popping to reduce the number of labels in the stack to a single label (196, 200).

8. A method as claimed in claim 7 further comprising the step of VLAN tagging traffic from different entities to separate traffic in the Layer 2 transport.

9. A system for providing access to service networks for third entities, said system comprising:
an edge-facing device (120, 120') through which said entities (144, 146) gain access to a Layer 2 transport;
a core-facing device (110, 110') for coupling to the service network (100);
a module for establishing at least one label switched path between the edge-facing device (120, 120') and the core-facing device (110, 110');
said edge-facing device (120, 120') comprising a module for establishing an L2TP tunnel over the label switched path to transport traffic between the edge facing device and the service network (100) and
**characterized by**
said core-facing device (110, 110') comprising a module for providing label swapping between the L2TP tunnel and an MPLS tunnel to the service network at the core-facing device, wherein the label swapped at the core device is the header added by L2TP.

10. A system as claimed in claim 9 wherein the module for establishing includes encapsulating Layer 2 packets for transport over the L2TP tunnel and wherein a resulting encapsulation of Layer 2 packets is compatible with an encapsulation for Layer 2 packets over MPLS.

11. A system as claimed in claim 9 wherein the core-facing device (110) includes module for an L2TP Network Server LNS function and wherein the LNS includes a Virtual Private Network Provider Edge VPN PE function.

12. A system as claimed in claim 11 wherein the edge-facing device (120) includes module for an L2TP Access Concentrator LAC function.

13. A system as claimed in claim 11 wherein the MPLS is carried over an Ethernet network, such that the LAC and LNS are MPLS adjacent routes and use penultimate hop label stack popping to reduce the number of labels in the stack to a single label (196, 200).

14. A system as claimed in claim 13 wherein the L2TP payload is also Ethernet and Layer 2 VPN services realized by the PE are one of LAN extension, Transparent LAN service, VLAN switched services and like Virtual Private Ethernet services.

## Revendications

1. Un procédé d'accès à un réseau de services (100) par l'intermédiaire d'un transport de Couche 2 ayant un dispositif faisant face à la périphérie (120, 120') à travers lequel une entité (144, 146) accède au transport de Couche 2, et un dispositif faisant face au coeur (110, 110') couplé au réseau de services (100), le procédé comprenant les étapes consistant à :
établir un chemin à commutation par étiquettes, du type commutation par étiquettes multiprotocole, MPLS ("Multi-Protocol Label Switching"), entre le dispositif faisant face à la périphérie (120, 120') et le dispositif faisant face au coeur (110, 110');
établir un tunnel de protocole d'acheminement en tunnel de Couche 2, L2TP ("Layer 2 Tunneling Protocol") (194) sur le chemin à commutation par étiquettes pour transporter le trafic entre le dispositif faisant face à la périphérie (120, 120') et le réseau de services (100); et
**caractérisé par**
la permutation d'une étiquette (196, 200) entre le tunnel L2TP et un tunnel MPLS vers le réseau de services, au dispositif faisant face au coeur (110, 110'), l'étiquette permutée au dispositif faisant face au coeur (110, 110') étant l'en-tête ajouté par le L2TP.

2. Un procédé selon la revendication 1, dans lequel l'étape d'établissement comprend l'encapsulation de paquets de Couche 2 pour le transport par le tunnel L2TP.

3. Un procédé selon la revendication 2, dans lequel l'étape d'encapsulation de paquets de Couche 2 procure une encapsulation semblable à une encapsulation Martini pour des paquets de Couche 2 sur MPLS.

4. Un procédé selon la revendication 1, dans lequel l'étape d'établissement d'un chemin à commutation par étiquettes comprend l'établissement d'une fonction de serveur de réseau L2TP, LNS ("L2TP Network Server") au dispositif faisant face au coeur (110).

5. Un procédé selon la revendication 4, dans lequel le transport de Couche 2 est un réseau Ethernet et l'étape d'établissement d'un chemin à commutation par étiquettes comprend l'établissement d'une fonction de concentrateur d'accès L2TP, LAC (L2TP Access Concentrator), au dispositif faisant face à la périphérie (110).

6. Un procédé selon la revendication 5, dans lequel la fonction LAC et la fonction LNS comprennent des commutateurs MPLS adjacents.

7. Un procédé selon la revendication 6, dans lequel la fonction LAC et la fonction LNS comprennent des commutateurs MPLS adjacents qui utilisent la remontée d'une pile d'étiquettes pour réduire le nombre d'étiquettes dans la pile à une seule étiquette (196, 200).

8. Un procédé selon la revendication 7, comprenant en outre l'étape de marquage par réseau local virtuel (VLAN) du trafic provenant de différentes entités, pour séparer le trafic dans le transport de Couche 2.

9. Un système pour donner accès à des réseaux de services pour des entités tierces, ce système comprenant :
un dispositif faisant face à la périphérie (120, 120') à travers lequel lesdites entités (144, 146) accèdent à un transport de Couche 2;
un dispositif faisant face au coeur (110, 110') pour le couplage au réseau de services (100);
un module pour établir au moins un chemin à commutation par étiquettes entre le dispositif faisant face à la périphérie (120, 120') et le dispositif faisant face au coeur (110, 110');
le dispositif faisant face à la périphérie (120, 120') comprenant un module pour établir un tunnel L2TP sur le chemin à commutation par étiquettes pour transporter du trafic entre le dispositif faisant face à la périphérie et le réseau de services (100), et **caractérisé par**
**le fait que** le dispositif faisant face au coeur (110,110) comprend un module pour assurer la permutation d'étiquettes entre le tunnel L2TP et un tunnel MPLS vers le réseau de services, au dispositif faisant face au coeur, l'étiquette permutée au dispositif faisant face au coeur étant l'en-tête ajouté par le L2TP.

10. Un système selon la revendication 9, dans lequel le module pour établir un tunnel comprend l'encapsulation de paquets de Couche 2 pour le transport par le tunnel L2TP, et dans lequel une encapsulation résultante de paquets de Couche 2 est compatible avec un encapsulation pour des paquets de Couche 2 sur MPLS.

11. Un système selon la revendication 9, dans lequel le dispositif faisant face au coeur (110) comprend un module pour une fonction de serveur de réseau L2TP, LNS (L2TP Network Server), et dans lequel le LNS comprend une fonction d'Extrémité Fournisseur de Réseau Privé Virtuel, VPN PE (Virtual Private Network Provider Edge).

12. Un système selon la revendication 11, dans lequel le dispositif faisant face à la périphérie (120) comprend un module pour une fonction de Concentrateur d'Accès L2TP, LAC (L2TP Access Concentrator).

13. Un système selon la revendication 11, dans lequel le trafic MPLS est transporté sur un réseau Ethernet, de façon que le LAC et le LNS correspondent à des routes MPLS adjacentes et utilisent la remontée d'une pile d'étiquettes d'avant-dernier bond pour réduire le nombre d'étiquettes dans la pile à une seule étiquette (196, 200).

14. Un système selon la revendication 13, dans lequel la charge utile L2TP est également Ethernet et des services de VPN de Couche 2 mis en oeuvre par l'Extrémité Fournisseur (PE) sont l'un d'une extension de réseau local, d'un service de réseau local transparent, de services commutés de réseau local virtuel et de services semblables du type Ethernet privé virtuel.

## Patentansprüche

1. Verfahren zum Zugang an ein Dienste-Netzwerk (100) über einen Schicht-2-Transport mit einer auf den Rand gerichteten Einrichtung (120, 120'), über die eine Einheit (144), (146) Zugang an den Schicht-2-Transport erhält, und mit einer auf den Kern gerichteten Einrichtung (110, 110'), die mit dem Dienste-Netzwerk (100) gekoppelt ist, wobei das Verfahren die folgenden Schritte umfasst:
Bereitstellen eines Multiprotokoll-Etikettvermittlungs-, MPLS-, Etikett-vermittelten Pfades zwischen der auf den Rand gerichteten Einrichtung (120, 120') und der auf den Kern gerichteten Einrichtung (110, 110');
Ausbilden eines Schicht-2-Tunnelungs-Protokoll-L2TP-Tunnels (194) über den Etikett-vermittelten Pfad zum Transport von Verkehr zwischen der auf den Rand gerichteten Einrichtung (120, 120') und dem Dienste-Netzwerk (100); und
**gekennzeichnet durch**
Austauschen eines Etiketts (196), (200) zwischen dem L2TP-Tunnel und einem MPLS-Tunnel an das Dienste-Netzwerk an der auf den Kern gerichteten Einrichtung (110, 110'), wobei das an der auf den Kern gerichteten Einrichtung (110, 110') ausgetauschte Etikett das **durch** L2TP hinzugefügte Kopf-Feld ist.

2. Verfahren nach Anspruch 1, bei dem der Schritt des Ausbildens das Einkapseln von Schicht-2-Paketen zum Transport über den L2TP-Tunnel einschließt.

3. Verfahren nach Anspruch 2, bei dem der Schritt des Einkapseln von Schicht-2-Paketen eine Einkapselung ähnlich einer Martini-Einkapselung für Schicht-2-Pakete über MPLS ergibt.

4. Verfahren nach Anspruch 1, bei dem der Schritt des Bereitstellens die Bereitstellung einer L2TP-Netzwerk-Server-LNS-Funktion an der auf den Kern gerichteten Einrichtung (110) einschließt.

5. Verfahren nach Anspruch 4, bei dem der Schicht-2-Transport ein Ethernet-Netzwerk ist und der Schritt der Bereitstellung die Bereitstellung einer L2TP-Zugangskonzentrator-LAC-Funktion an der auf den Rand gerichteten Einrichtung (110) einschließt.

6. Verfahren nach Anspruch 5, bei dem die LAC-Funktion und die LNS-Funktion benachbarte MPLS-Vermittlungen umfassen.

7. Verfahren nach Anspruch 6, bei dem die LAC-Funktion und die LNS-Funktion benachbarte MPLS-Vermittlungen umfassen, die das Etikett-Stapel-Abheben zur Verringerung der Anzahl von Etiketten in dem Stapel auf ein einziges Etikett (196, 200) verwenden.

8. Verfahren nach Anspruch 7, das weiterhin den Schritt der VLAN-Markierung von Verkehr von unterschiedlichen Einheiten umfasst, um den Verkehr in dem Schicht-2-Transport zu trennen.

9. System zur Bereitstellung eines Zugangs an Dienste-Netzwerke für dritte Einheiten, wobei das System folgendes umfasst:
eine auf den Rand gerichtete Einrichtung (120, 120'), über die die Einheiten (144, 146) Zugang an einem Schicht-2-Transport erhalten;
eine auf den Kern gerichtete Einrichtung (110, 110') zur Kopplung mit dem Dienste-Netzwerk (100);
ein Modul zur Ausbildung von zumindest einem Etikett-vermittelten Pfad zwischen der auf den Rand gerichteten Einrichtung (120, 120') und der auf den Kern gerichteten Einrichtung (110, 110');
wobei die auf den Rand gerichtete Einrichtung (120, 120') ein Modul zur Ausbildung eines L2TP-Tunnels über den Etikett-vermittelten Pfad zum Transport zwischen der auf den Rand gerichteten Einrichtung und dem Dienste-Netzwerk (100) umfasst; und
**dadurch gekennzeichnet, dass**
die auf den Kern gerichtete Einrichtung (110, 110') ein Modul zur Schaffung eines Etikett-Austausches zwischen dem L2TP-Tunnel und einem MPLS-Tunnel an das Dienste-Netzwerk an der auf den Kern gerichteten Einrichtung umfasst, wobei das an der auf den Kern gerichteten Einrichtung ausgetauschte Etikett dass durch L2TP hinzugefügte Kopffeld ist.

10. System nach Anspruch 9, bei dem das Modul zur Ausbildung die Einkapselung von Schicht-2-Paketen zum Transport über den L2TP-Tunnel einschließt, und bei dem eine resultierende Einkapselung von Schicht-2-Paketen mit einer Einkapselung für Schicht-2-Pakete über MPLS kompatibel ist.

11. System nach Anspruch 9, bei dem die auf den Kern gerichtete Einrichtung (110) ein Modul für eine L2TP-Netzwerk-Server-LNS-Funktion einschließt und bei dem die LNS eine virtuelle private Netzwerk-Anbieter-Rand-VPN-PE-Funktion einschließt.

12. System nach Anspruch 11, bei dem die auf den Rand gerichtete Einrichtung (120) ein Modul für eine L2TP-Zugangs-Konzentrator-LAC-Funktion einschließt.

13. System nach Anspruch 11, bei dem die MPLS über ein Ethernet-Netzwerk derart übertragen wird, dass die LAC und LNS benachbarte MPLS-Routen sind und ein am vorletzten Hop erfolgendes Etikett-Stapel-Abheben verwenden, um die Anzahl von Etiketten in dem Stapel auf ein einziges Etikett (196, 200) zu verringern.

14. System nach Anspruch 13, bei dem die L2TP-Nutzinformation ebenfalls Ethernet ist und die von der PE realisiertem Schicht-2-VPN-Dienste einer von LAN-Erweiterungs-,Transparenten LAN-Diensten, VLAN-vermittelten Diensten und ähnlichen Virtuellen Privaten Ethernet-Diensten ist.
